# EUROPEAN PATENT APPLICATION

(11) **EP 1 376 407 A2**
(43) Date of publication of application: **02.01.2004**
(21) Application number: 03014771.4
(22) Date of filing: 27.06.2003
(51) Int. Cl.: G06F 17/30

(54) **System and method for storing information searched on the internet for portable audio apparatus**

(30) Priority: 28.06.2002 KR 2002037048; 08.01.2003 KR 2003001142
(71) Applicant: e'star laboratories, Inc, Seocho-gu, Seoul (KR)
(72) Inventor: Hur, Jeong, Seoul (KR)
(74) Representative: Viering, Jentschura & Partner

(57) **Abstract**

Disclosed is a system for storing information searched on the Internet for a portable audio apparatus, including: a server agent for searching and mining relevant information from more than one site for providing arbitrary information on the wired or wireless Internet, by operating an information exploring robot agent according to searching condition and period set by a user and for extracting text information from mined information by performing a first filtering for the mined information according to searching condition; and a client agent for receiving text information extracted from the server agent, performing a second filtering according to searching condition set by a user, converting text information satisfying searching condition into voice information, and storing information by transmitting information to a portable audio apparatus. According to the system, without separately sparing a time in order to obtain desired digital contents such as an e-mail, information, news, a user could check desired information in form of voice data by getting the system to search and store digital contents in which a user is interested, by merely connecting a portable audio apparatus to the client agent.

## Description

### BACKGROUND OF INVENTION

### 1. Field of the Invention

The present invention relates to a system for storing information searched on the Internet and more particularly to a system and a method for storing information searched on the Internet for a portable audio apparatus, capable of periodically searching digital contents(e.g. e-mail, news, magazines) desired by a user on the Internet, automatically storing the searched information at a portable audio apparatus.

### 2. Description of Related Art

Generally, netizens utilizing the Internet using a computer read information in form of a paper by printing or store the information in a specific folder for interesting information among data searched by themselves.

Also, netizens using an electronic mail server read information in form of a paper by printing or store the information in a specific folder for interesting information among electronic mails received to them.

But, salaried men in the present age are very busy and a range of information in which they are interested, is so broad that it is even cumbersome to read all the information by printing or to store information in a specific folder. Particularly, it is a burden for salesmen driving frequently or self-employed persons to read calmly digital information in which they are particularly interested or to have time for reading electronic mails received to them.

### SUMMARY OF THE INVENTION

To solve the above-indicated problems, it is, therefore, an object of the present invention to provide a system and a method for storing information searched on the Internet for a portable audio apparatus, capable of searching information desired by a user among digital contents such as information, news, etc. on the Internet, converting the searched information into voice, and then storing the searched information at a portable audio apparatus.

According to one aspect of the present invention, a system for storing information searched on the Internet for a portable audio apparatus, includes: a server agent for searching and mining relevant information from more than one site for providing arbitrary information on the wired or wireless Internet, by operating an information exploring robot agent according to searching condition and period set by a user and for extracting text information from mined information by performing a first filtering for the mined information according to searching condition; and a client agent for receiving text information extracted from the server agent, performing a second filtering according to searching condition set by a user, converting text information satisfying searching condition into voice information, and storing information by transmitting information to a portable audio apparatus.

According to another aspect of the present invention, a method for storing information searched on the Internet in a system having a server agent for mining by searching arbitrary information on the wired or wireless Internet and a client agent for storing, at a portable audio apparatus, information mined by the server agent, the method includes the steps of: performing, at the server agent, searching and mining relevant information on the Internet according to searching condition and period set by a user and extracting text information from mined information by performing a first filtering for the mined information; receiving, at the client agent, the text information extracted by the server agent, converting text information satisfying searching condition into voice information by performing a second filtering according to searching condition set by a user in advance; storing the voice information at a portable audio apparatus if the portable audio apparatus is electrically connected to the client agent.

According to the present invention having the foregoing textistics, digital contents desired by a user such as an e-mail, information, news, is possibly stored during non-working hours, so that stored information could be checked in form of voice at a specific time. Therefore, a user could search desired digital information, getting information to be stored in an MP3(MPEG(Moving Picture Experts Group) Audio 3) player during sleeping time, so that a user could check gathered information in form of voice conveniently in his car upon going to work.

### BRIEF DESCRIPTION OF THE DRAWINGS

The above objects, features and advantages of the present invention will become more apparent from the following detailed description when taken in conjunction with the accompanying drawings, in which:

Fig.1 is a block diagram of construction for a system for storing information searched on the Internet for a portable audio apparatus according to the present invention;

Fig.2 is a structural block diagram showing a hierarchical structure of a client agent shown in Fig.1;

Fig.3 is a drawing for a control flow showing operation of a client agent shown in Fig.1;

Fig.4 is a drawing for a control flow showing operation of a server agent shown in Fig.1; and

Fig.5 is a drawing for a control flow showing operation of an e-mail server shown in Fig.1.

### DETAILED DESCRIPTION OF EXEMPLARY EMBODIMENTS

A preferred embodiment of the present invention will now be described with inquiry to the accompanying drawings. In the following description, same drawing inquiry numerals are used for the same elements even in different drawings. The matters defined in the description such as a detailed construction and elements are nothing but the ones provided to assist in a comprehensive understanding of the invention. Thus, it is apparent that the present invention can be carried out without those defined matters. Also, well-known functions or constructions are not described in detail since they would obscure the invention in unnecessary detail.

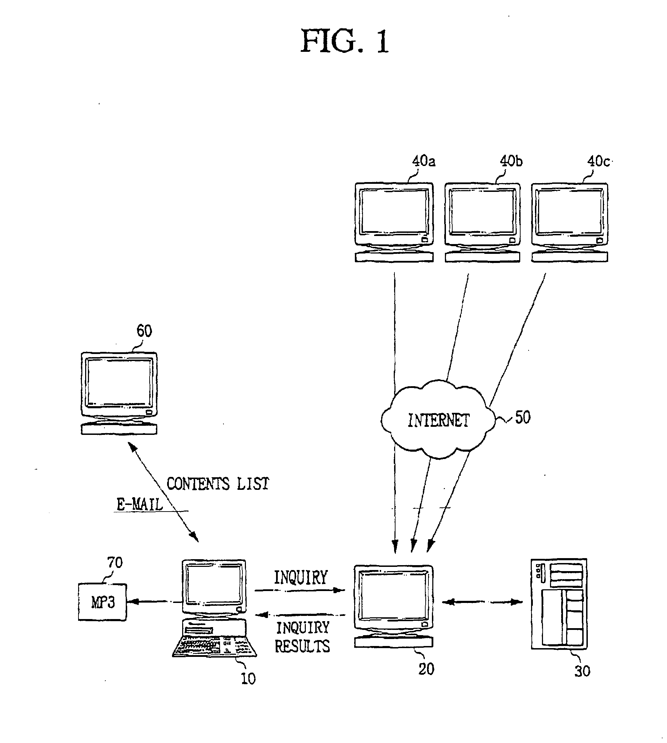

Fig.1 is a block diagram of construction for a system for storing information searched on the Internet for a portable audio apparatus according to the present invention. Referring to Fig.1, the system includes: more than one site(IP: Information Provider) 40a-40c for providing information on the wired or wireless Internet 50; a server agent 20 for searching data from the sites 40a-40c according to searching condition and period set by a user and transmitting searched data; a data storing unit 30 for storing and managing data searched by the server agent 20; a client agent 10 for receiving data transmitted from the server agent 20, deciding whether the received data satisfies a predetermined searching condition, converting only data satisfying a predetermined searching condition into voice data; a portable audio apparatus 70 for storing voice data converted from the client agent 10; more than one electronic mail server 60 for searching and transmitting data satisfying a predetermined condition by a user according to a request from the client agent 10.

Here, for a portable audio apparatus, an MP3 player or an audio apparatus of similar kind to that, is preferably used.

The server agent 20 is equipped with an information exploring robot agent, searching a variety of information from various sites 40a-40c on the Internet, mining necessary data by operating the mounted information exploring robot agent. Upon searching and mining data, a predetermined searching condition by a user is used, and searching and mining are performed according to a period set by a user. A first filtering is performed for the mined data according to searching condition set by a user, and unnecessary data is deleted as a result of the first filtering.

The client agent 10 receives text data extracted from the server agent 20, performing a second filtering according to searching condition set by a user, converting only text data satisfying searching condition into voice data.

If a portable audio apparatus 70 is electrically connected, the client agent 10 performs an authentication procedure in order to check whether the connected audio apparatus 70 is a portable audio apparatus set in advance, and storing the converted voice data into the portable audio apparatus 70 only if the portable audio apparatus 70 is the portable audio apparatus set in advance as a result of the authentication procedure.

For such authentication procedure, a method for checking, at the client agent 10, a serial number of a chip provided within the portable audio apparatus 70, a method wherein a user inputs again an authentication code(user name, password) set for the system in advance by a user and authentication is performed by comparison of the stored authentication code in advance with the input authentication code, or already publicly known method could be used. Therefore, the present system could store voice information of desired data only at the portable audio apparatus 70 set in advance.

The data storing unit 30 is a data house for storing and managing necessary data according to selection by a user among data searched from the server agent 20. For data which could be stored in this data storing unit 30, a variety of digital contents such as news, e-book could be included.

Though an embodiment for separately providing the data storing unit 30 apart from the server agent 20, is shown in Fig.1, such data storing unit 30 could also be realized within the server agent 20.

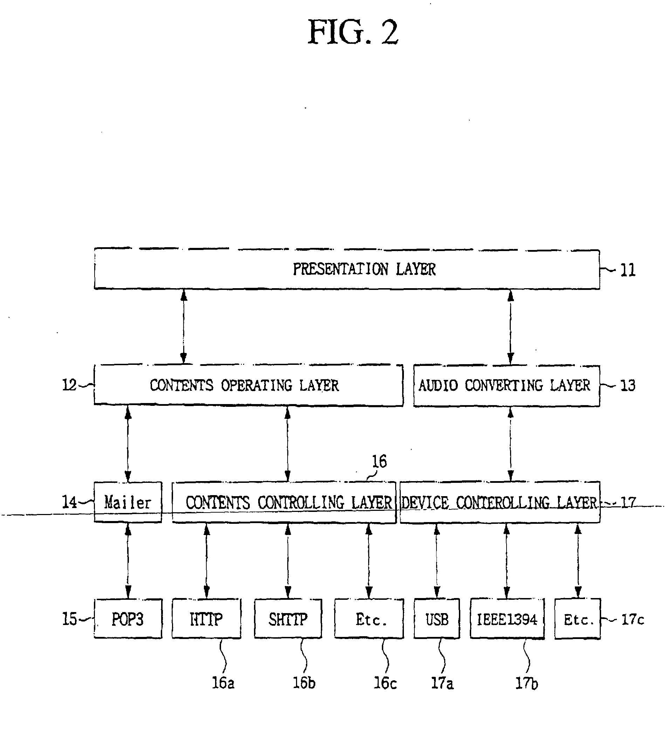

Fig.2 is a structural block diagram showing a hierarchical structure of a client agent shown in Fig.1. Referring to Fig.2, the client agent 10 consists of: a presentation layer 11 for controlling graphic interfacing and agent scheduling; a contents operating layer 12 which is a sub-layer of the presentation layer 11, for controlling contents by a predetermined category, controlling filtering of contents; an audio converting layer 13 which is a sub-layer of the presentation layer 11, for coding contents into audio data, identifying contents; a contents controlling layer 16 which is a sub-layer of the contents operating layer 12, for controlling a protocol and operation of the data storing unit; and a device controlling layer 17 which is a sub-layer of contents operating layer 12, for controlling a peripheral device and physical data.

Operation of a system for storing information searched on the Internet according to the present invention having the foregoing construction will be described in the following.

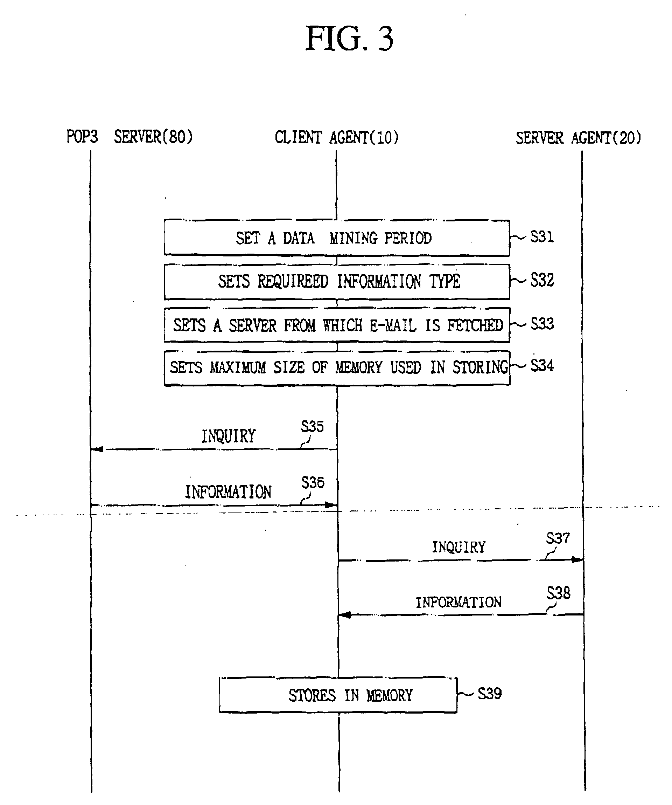

On the first place, as shown in Fig.3, a user sets, at the client agent 10, a period for mining data, categories of information for which searching is requjred, a server from which an e-mail is fetched, the maximum size of memory used in storing, respectively(S31-S34).

Therefore, in case that a server from which an e-mail is fetched, is a POP3(Post Office Protocol 3) server 80 shown in Fig.3, if the client agent 10 requests the POP3 server for inquiry of data, the POP3 server 80 searches data stored in advance, transmitting relevant data to the client agent 10(S35-S36).

Also, to fetch desired data from the server agent, the client agent 10 receives the relevant information by requesting inquiry of information in the same manner as it is communicating with the POP3 server(S37-S38).

In this manner, the client agent 10 which has received desired data stores the received data at a designated memory(S39).

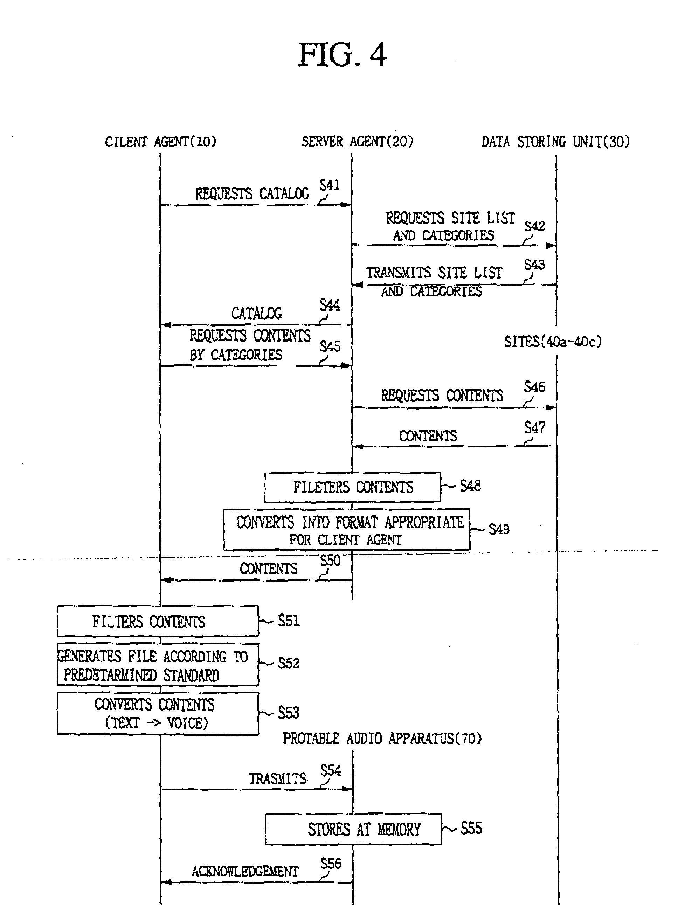

Operation between a client 10 and a server agent 20 will be described in more detail with inquiry to Fig.4 in the following. Referring to Fig.4, in a status that a user has set, at the client agent 10, a period for mining data, categories of information for which searching is required, a server from which an e-mail is fetched, the maximum size of memory used in storing, respectively, as shown in Fig.3, if the client agent 10 requests the server agent 20 for a catalog, the server agent 20 requests the data storing unit 30 for a list of sites and a categories thereof set in advance (S41,S42).

Then, the data storing unit 30 transmits a list of the sites stored in advance and the categories thereof to the server agent 20, and the server agent 20 transmits a catalog including the list of the sites and categories thereof to the client agent 10(343,344).

Subsequently, the client agent 10 requests the server agent 20 for contents according to categories set in advance, and the server agent 20 request the predetermined sites 40a-40c to search and fetch data(S45,S46).

Each site 41a-41c transmits contents requested by the server agent 20, to the server agent 20(S47).

The server agent 20 extracts text data by performing a first filtering process for the received data (S48). For example, data mined by the server agent 20 could include a variety of data such as image data, moving image data, music data, voice data, text data, etc. If searching condition is to extract only the text data, the rest data is filtered and eliminated.

In the meantime, if music data or voice data such as a news program provided in form of voice is necessary as well as text data, a filtering process could be performed so that music data or voice data may pass the filtering process.

Subsequently, before transmitting data prepared by the first filtering process, the sever agent 20 converts data to transmit, into a format appropriate for a protocol used by the client agent 10 so that the client agent 10 may effectively receive data(S49).

After such converting operation is completed, the server agent 20 transmits the searched data to the client agent 10(S50).

As shown in Fig.4, the client agent 10 receives data transmitted from the server agent 20, performing the second filtering so that only predetermined data is received(S51). For example, the client agent 10 deletes files including predetermined words such as "advertisement", "adult" among received data.

Subsequently, the client agent 10 generates a file with data prepared by the second filtering process according to a predetermined standard(552), converting into voice data(553). For such converting technology into voice data, publicly known art may be used.

After that, the client agent 10 stores the converted voice data at a memory of a portable audio apparatus 70 through a connected cable(S55).

The memory of a portable audio apparatus 70 transmits a reception confirmation signal for informing completion of storing process, to the client agent 10 if storing of the voice data is completed (S56).

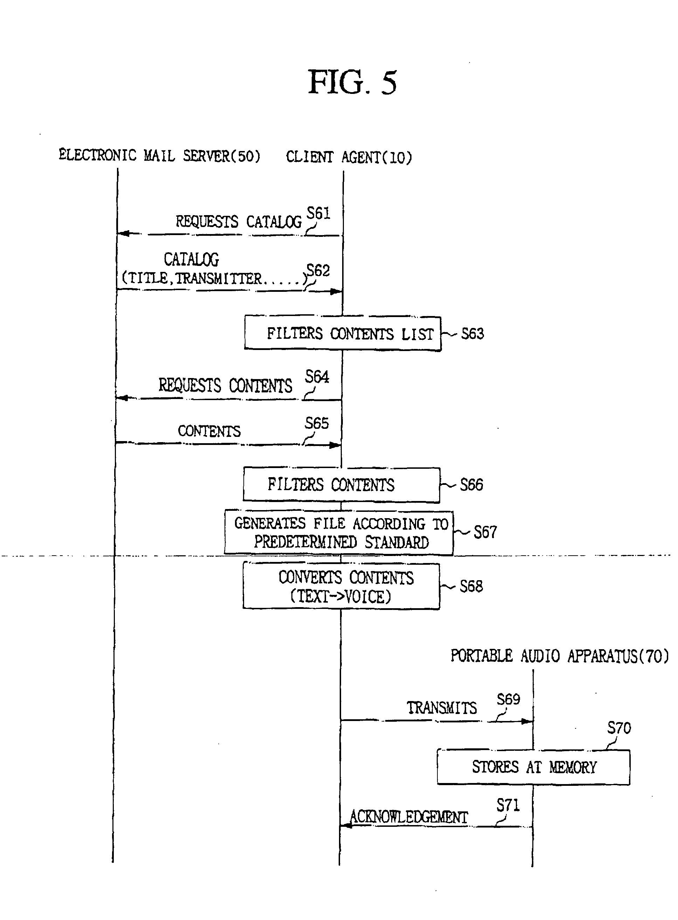

Operation between the client agent 10 and the electronic mail server 50 of the present invention will be described in detail with inquiry to Fig.5 in the following.

In a status that a user has set, at the client agent 10, a period for mining data, categories of information for which searching is required, a server from which an e-mail is fetched, the maximum size of memory used in storing, respectively, as shown in Fig.3, if the client agent 10 requests the electronic mail server 50 for a catalog, the electronic mail server 50 transmits a catalog including a title and a transmitter, to the client agent 10(S61 ,S62).

Subsequently, the client agent 10 filters only a list of a predetermined contents among received catalogs(S63), then requesting the electronic mail server 50 for the filtered contents(S64). Then, the electronic mail server 50 transmits contents requested by the client agent 10(S65).

The client agent 10 receives data transmitted from the electronic mail server 50, performs a filtering process so that only predetermined data is received(S66). For example, the client agent 10 deletes files including a predetermined word such as "advertisement", "adult" among received data.

Subsequently, the client agent 10 generates a file with data prepared by the filtering process according to a predetermined standard(S67), converting into voice data(S68).

After that, the client agent 10 transmits and stores the converted voice data at a memory of a portable audio apparatus 70 through a connected cable (S69, S70).

The memory of a portable audio apparatus 70 transmits a reception confirmation signal for informing completion of storing process, to the client agent 10 if storing of the voice data is completed (S71).

Here, the electronic mail server 50 is a private e-mail server and a system not supporting POP3 is excluded.

As is apparent from the foregoing, a user need not to spare a time separately in order to obtain digital contents such as an e-mail, information, news desired by a user. According to the present invention, if merely connecting a portable audio apparatus to the client agent, a user could check desired information in form of voice data by searching and storing digital contents in which a user is interested.

Therefore, according to a system for storing information searched on the Internet of the present invention, a user could conveniently check gathered data in form of voice in the inside of a car upon going to work, by getting the system to search desired digital information and store the information at an MP3 player during a user's sleeping hours. Accordingly, the present invention would provide a very convenient function to busy salaried men and self-employed workers having no time.

While the invention has been shown and described with inquiry to certain preferred embodiments thereof, it will be understood by those skilled in the art that various changes in form and details may be made therein without departing from the spirit and scope of the invention as defined by the appended claims.

## Claims

1. A system for storing information searched on the Internet for a portable audio apparatus comprising:
a server agent for searching and mining relevant information from more than one site for providing arbitrary information on a wired or wireless Internet, by operating an information exploring robot agent according to searching condition and period set by a user, and for extracting text information from mined information by performing a first filtering for the mined information according to searching condition; and
a client agent for receiving text information extracted from the server agent, performing a second filtering according to searching condition set by a user, converting text information satisfying searching condition into voice information, and storing information by transmitting information to a portable audio apparatus.

2. The system according to claim 1, wherein the first filtering at the server agent eliminates image information and moving image information among mined information through a filtering process.

3. The system according to claim 1, wherein the second filtering at the client agent deletes files including predetermined words among mined information through a filtering process.

4. The system according to claim 1, wherein in case that the portable audio apparatus is connected, the client agent performes an authentication procedure in order to check whether the connected audio apparatus is a portable audio apparatus set in advance, and storing the voice data only if the portable audio apparatus is the portable audio apparatus set in advance as a result of the authentication procedure.

5. The system according to claim 4, wherein the client agent performs the authentication procedure by checking a serial number of a chip provided within the portable audio apparatus.

6. The system according to claim 4, wherein the client agent performs the authentication procedure by receiving an authentication code, and comparing the authentication code with an authentication code set in advance by a user.

7. The system according to claim 1, further comprising more than one electronic mail server for searching electronic mail data satisfying a predetermined condition according to a request from the client agent, transmitting searched electronic mail data to the client agent.

8. A method for storing information searched in a system including a server agent for searching and mining arbitrary information on a wired or wireless Internet and a client agent for storing information mined by the serve agent into a portable audio apparatus, the method comprising the steps of:
performing, at the server agent, searching and mining relevant information on the Internet according to a searching condition and a period set by a user and extracting text information from mined information by performing a first filtering for the mined information;
receiving, at the client agent, text information extracted by the server agent, converting text information satisfying searching condition into voice information by performing a second filtering according to searching condition set by a user in advance;
storing the voice information at a portable audio apparatus if the portable audio apparatus is electrically connected to the client agent.

9. The method according to claim 8, wherein the first filtering at the server agent eliminates image information and moving image information among mined information through a filtering process.

10. The method according to claim 8, wherein the second filtering at the client agent deletes files including predetermined words among mined information through a filtering process.

11. The method according to claim 8, further comprising the step of performing an authentication procedure in order to check whether the connected audio apparatus is a portable audio apparatus set in advance, and storing the voice data only if the portable audio apparatus is the portable audio apparatus set in advance as a result of the authentication procedure.

12. The method according to claim 11, wherein the client agent performs the authentication procedure by checking a serial number of a chip provided within the portable audio apparatus.

13. The method according to claim 11, wherein the client agent performs the authentication procedure by receiving an authentication code, and comparing the authentication code with an authentication code set in advance by a user.
